# EUROPEAN PATENT SPECIFICATION

(11) **EP 3 003 795 B1**
(45) Date of publication and mention of the grant of the patent: **08.08.2018**
(21) Application number: 14733842.0
(22) Date of filing: 27.05.2014
(51) Int. Cl.: B60R 21/36

(54) **PEDESTRIAN PROTECTION SYSTEM AND AIRBAG**
FUSSGÄNGERSCHUTZSYSTEM UND AIRBAG
SYSTÈME ET COUSSIN DE SÉCURITÉ DE PROTECTION DE PIÉTON

(30) Priority: 04.06.2013 US 201361830965 P
(43) Date of publication of application: 13.04.2016
(73) Proprietor: Key Safety Systems, Inc., Sterling Heights, MI 48314 (US)
(72) Inventor: VOLKMANN, Matthias, 61476 Kronberg (DE); MUZAFFAR, Shoaib, 63128 Dietzenbach (DE)
(74) Representative: Gislon, Gabriele
(86) International application number: PCT/US2014/039571
(87) International publication number: WO 2014/197237

(56) References cited:
- WO-A1-2007/045321
- US-A1- 2007 063 492
- US-B2- 6 857 495

## Description

### Field of the Invention

The present invention relates to an inflatable airbag system and more particularly to a pedestrian airbag system for a motor vehicle.

### Background of the Invention

When a motor vehicle collides with a pedestrian, bicycle or motorcycle the impacted individual is thrown upwardly and often is secondarily tossed into the windshield or front pillars of the motor vehicle. When this occurs, the person struck is placed in more danger of serious head and neck injuries due to this secondary collision with the windshield. Often the initial impact is not too serious as the lower extremities absorb the initial blow leaving bruising and other more minor injuries. It is the impact of the head and neck regions on the pedestrian or rider that often most seriously injures the person. For these and other reasons, helmets are recommended for riders of both bicycles and motorcycles.

As collisions with people are a reality, auto manufacturers have been developing externally mounted airbag devices under the rear part of the hood to deploy a pedestrian airbag to absorb the impact of the struck person tossed onto the windshield.

These systems inflate the airbag along the front surfaces of the A pillars and the windshield. One such device is shown in US 6,857,495 B2 entitled "Inflatable External Airbag System." As shown in figure 1, the prior art inflated airbag 4 lies on the slanted A pillars and part of the windshield 20. In this orientation, only the air pressure inside the prior art inflated cushion chamber protects the individual. The inflated bag 4 rests on the slanted windshield 20. Another example of such device is shown in WO 2007/045321, according to the preamble of claim 1. As shown in figure 3, the deployment direction of the prior art airbag 1 is aligned parallel to the direction of the windshield 2 and the airbag 1 lies on the windshield 2. Typically, the slant angle is 45° or less on passenger cars in an attempt to lower wind resistance. When an individual is tossed into the air when hit by a moving vehicle, the flight or trajectory is such that the individual hits the windshield at a high angle of attack, typically about 65° off horizontal.

When this trajectory occurs, as is most common at impacts around 30 mph, the current prior art airbags lying on the slant of the windshield are almost perpendicular to the head traveling on a 65° path. As a result, the head is thrust into the inflated bag with the neck in an almost straight-on collision path which puts a large compression force of the neck vertebrae and spine. The chances of serious injury are therefore greatly increased even with a deployed and inflated prior art pedestrian airbag. Accordingly, there is a great need to improve the pedestrian airbags currently available.

It is furthermore a desired objective to design and produce a system that does not introduce issues that direct the head and neck of a hit pedestrian normal to the airbag cushion.

These and other objectives are achieved by the invention described hereinafter.

### Summary of the Invention

An inflatable external pedestrian protection system for a motor vehicle as defined in claim 1 has a unique deployment configuration. The motor vehicle has a hood (or bonnet) and a windshield (or windscreen) adjacent the hood at a rear end of the hood. The inflatable external pedestrian protection system has an inflatable airbag cushion for deployment between the hood and along the windshield and a means for inflating the airbag cushion. The airbag cushion has an inflated deployed cushion position angle α relative to a reference plane. The angle α will be between 60° and 90° to the horizontal plane. The inflatable airbag cushion when deployed has the cushion position angle α greater than the windshield inclination angle as measured from the reference plane. The inflatable airbag cushion when deployed has a space between the vehicle windshield and the airbag cushion due to the difference in the windshield inclination angle and the cushion position angle α.

A pedestrian impact angle β of 65° relative to horizontal forms an included angle θ with the inflated airbag cushion position angle α of 55° or less. Preferably, the included angle θ is 25° when the airbag position angle α is 90°. A pedestrian impacting the airbag cushion at a pedestrian impact angle β of 65° will be caused to rotate. The smaller the angle θ between the pedestrian impact angle β and the inflated cushion position angle α of the airbag cushion causes greater rotation of the pedestrian reducing the potential for head or neck trauma.

The airbag cushion has a front panel side and a rear panel side, the two panels being joined together by a peripheral seam around the airbag cushion, the seam extending along the top, lateral sides and bottom. The cushion position angle is defined as a straight line passing from the bottom to the top between the front panel side and the rear panel side. The cushion position angle is defined by a line drawn through the peripheral seam along a lateral side. The inflated airbag cushion has the rear side panel of generally uniform flat or substantially straight shape and the front panel has an enlarged lower portion with a generally uniform flat or substantially straight upper portion so upon inflation the cushion forms an inflated chamber with an impact absorbing thickness that increases toward the hood. The cushion position angle α is located mid-way between the rear and front side inflated panels at the upper portion of the inflated cushion extending in a straight line toward the bottom of the cushion without adjustment for the enlarged lower portion of the front panel. The cushion angle can also be defined as the angle between a plane that extends through the geometric center of the airbag cushion and a horizontal plane with both planes intersecting at The cushion pivot point which generally will be located at the bonnet edge.

### Brief Description of the Drawings

The invention will be described by way of example and with reference to the accompanying drawings in which:
Figure 1 is a prior art cross sectional view of a conventional pedestrian airbag cushion deployed and inflated.
Figures 2A, 2B and 2C are side views with varying pedestrian airbag cushion angles with a pedestrian impact angle of 65°.
Figures 3A, 3B and 3C are side views of the pedestrian airbag cushion of the present invention as it appears when inflated at varying position angles showing the rotation of the pedestrian at a 65° impact angle.
Figure 4 is a view of a vehicle with a schematic of the preferred range of the cushion position angles.
Figure 5 is a side view of an inflated airbag cushion of the present invention in its inflated appearance showing a gap between the windshield and the cushion.

### Detailed Description of the Invention

The prior art inflatable external airbag system 1 from US Patent 6,857,495 B2 has a container-like retainer (airbag holding member) 2 which has an opening for airbag deployment formed in its top, and an airbag 4 which is normally folded and accommodated in the retainer 2, a gas generator (inflator) 6 for inflating the airbag 4. The airbag system 1 is disposed in a space behind a rear area (in the longitudinal direction of the vehicle) of a hood 10 covering the top of the vehicle front body, wherein the retainer 2 is fixed to a vehicle member (not shown) through a bracket 8.

In this prior art embodiment, the hood 10 comprises a first hood portion (i.e. front hood portion) 12 and a second hood portion (i.e. rear hood portion) or hinged hood flap 14, which is a separate member from the first hood portion 12 and acts as a deployment direction regulating member. The open top of the retainer 2 is normally covered by the second hood portion 14 in this prior art device.

The first hood portion 12 is secured as a whole to the vehicle body and the second hood portion 14 is connected to the first hood portion 12 so that the front end of the second hood portion 14 is coupled to the rear end of the first hood portion 12 via a hinge 16. The hinge 16 has a pivot shaft extending in a direction parallel to the width direction of the vehicle. The second hood portion 14 can pivot about the pivot shaft 16a in the vertical direction just like a flap.

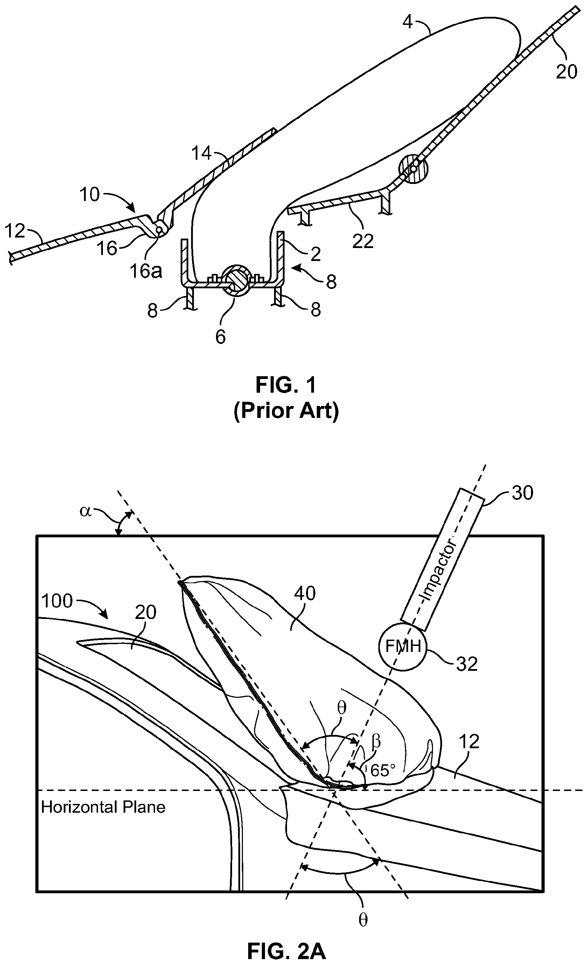

The second hood portion 14 normally extends in the horizontal direction to have an upper surface flush with the upper surface of the first hood portion 12 and to cover the open top of the retainer 2. As the prior art airbag 4 starts to be inflated, the second hood portion 14 is pushed by the airbag 4 and thus pivots upwardly about the pivot shaft 16a of the hinge 16 just like a flap so as to open the open top of the retainer 2. At this point, the second hood portion 14 hangs over the airbag 4 being deployed, thereby regulating the deployment direction of the airbag 4 to deflect the deployment toward the windshield 20 as shown in figure 1.

A cowl top 22 is arranged at a location beneath the windshield 20. The cowl top 22 is normally adjacent to the rear end of the second hood portion 14 and has an upper surface flush with the upper surface of the second hood portion 14 (that is, the upper surface of the hood 10).

This prior art pedestrian airbag system 1 is very similar to conventional systems in that the inflated cushion when deployed rests in contact with the A pillars and slanted windshield. The prior art typically has the windshield slanted much less than 60° relative to the horizontal, typically about 45°. This prior art system 1 uses a hinged hood flap 14. Often this part is not needed because of the design or because the entire hood can lift. In either situation, the deployed cushion rests on the surface of the slanted windshield.

The present invention is similarly inflated by a means of inflation as a gas generator 6 of figure 1; however, as shown in the figures 2A - 5, no hinged hood portion is required.

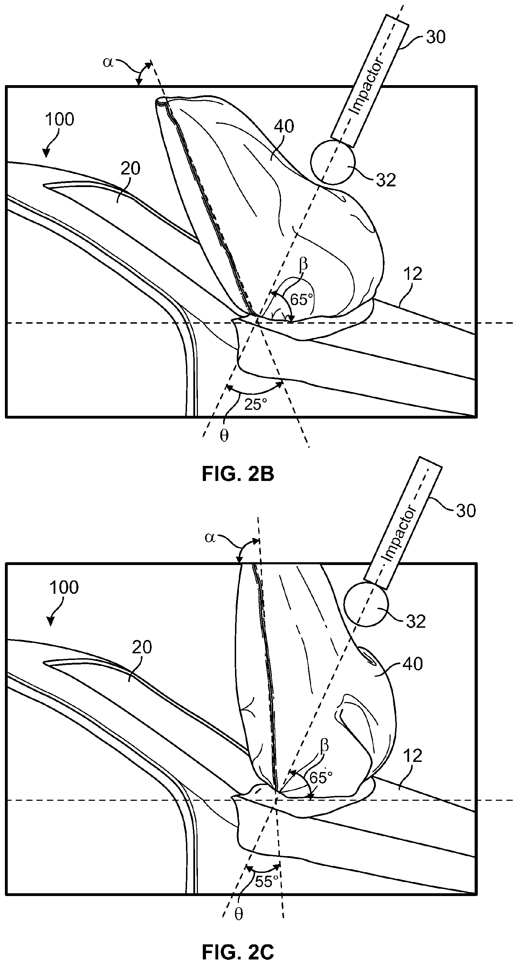

With reference to figures 2A, 2B and 2C; the inflated pedestrian airbag cushion 40 of the present invention is shown at various inflated deployed position angles α. In figure 2A, the position angle α is set at a low angle relative to a horizontal plane.

In the figures, the pedestrian simulator impactor 30 has a trajectory of 65° relative to the horizontal plane. 65° is the Euro/NCAP defined impactor angle. This is most representative of a pedestrian trajectory at 40 K/hr vehicle speed.

As shown in figure 2A, this 65° angle is depicted as β and the cushion position angle as α. The difference between β - α is defined as θ. As shown, θ is between 90° and 60°. In figure 2A, when the windshield 20 is about 45° above horizontal, the cushion position angle α is 80°.

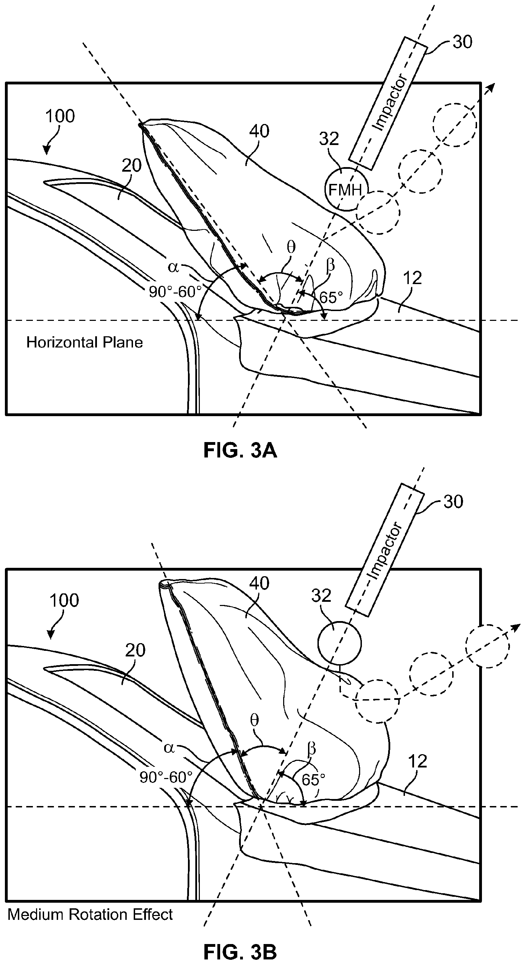

With reference to figure 3A, at this angle the pedestrian simulator impactor 30 hits with the leading FMH (Free Motion Head) 32 or head almost at 80°, just under normal or perpendicular to the windshield 20. This drives the neck and head into serious compression as there is little rotation effect at impact.

With reference to figures 2B and 3B, when the cushion position angle α is set at 60° and the impactor at 65°, the difference or angle θ is 55°. At this position, the FMH or head 32 of the impactor 30 has a very nice increase in rotation greatly reducing the compression loads on the neck and shoulders. In this situation, the airbag 40 will rotate the pedestrian sufficiently to greatly reduce head and neck trauma.

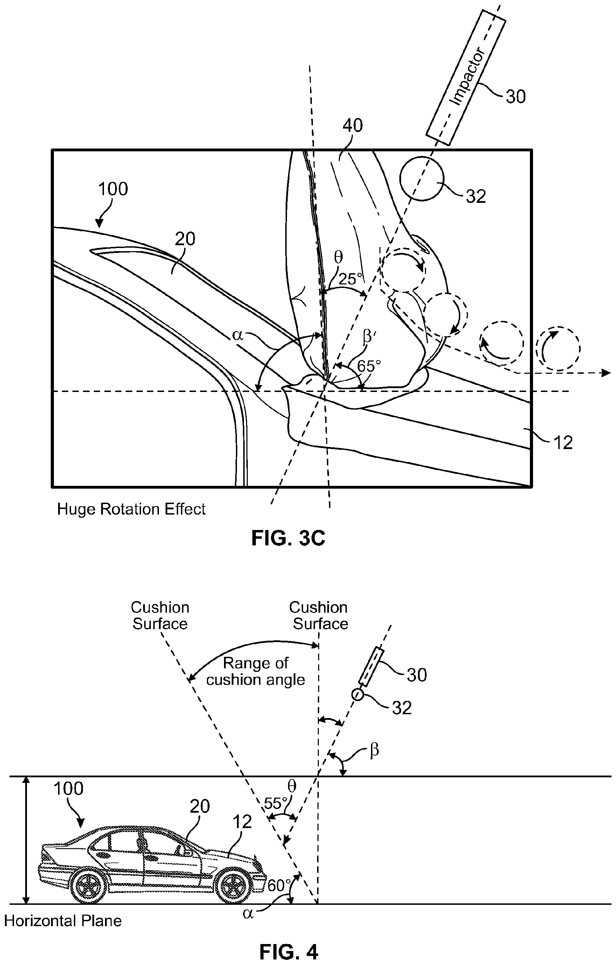

In figures 2C and 3C, the airbag cushion 40 when inflated is shown substantially vertical having the cushion position α set at 90°. At this position with the impactor angle β at 65° means the θ angle is at 25°. As shown in figure 3C, this creates a very large or high rotation effect.

To employ such a pedestrian airbag cushion 40, it is desirable to have the lower portion of the front panel 42 bulge out as shown to provide sufficient space to catch the head 32 of the pedestrian 30 as he impacts the windshield 20 area. As shown, the rear panel 44 is virtually flat when the airbag 40 is inflated. In both situations shown in figures 2B, 3B and 2C, 3C; the airbag 40 is widely spaced from the windshield 20 except at the near bottom. This space allows the airbag 40 to cushion the pedestrian impact by the gas within the airbag 40 and also by a shock absorbing spring-like deflection made possible by this space or gap between the rear of the inflated cushion 40 and the windshield 20.

With reference to figure 4, an exemplary vehicle 100 is shown. The horizontal plane is depicted at ground level and above the vehicle 100. The geometry of the optimal cushion angles α is shown between 60° and 90°, the space between those being the range for moderate to huge rotation effects when the pedestrian impactor 30 is still at 65° off horizontal as shown.

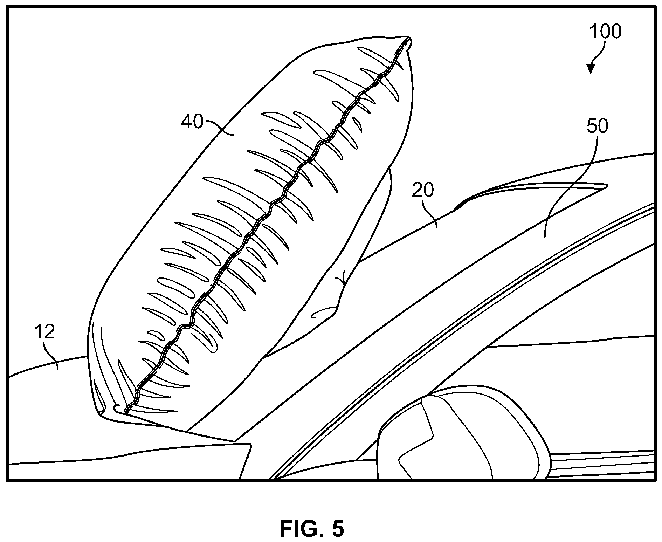

Figure 5 is a side view of an inflated cushion 40 according to the present invention and the vehicle A pillar 50 and windshield 20. As shown, all but the very bottom of the airbag 40 is in contact with the windshield 20 and the vast majority of the inflated bag is clearly spaced away from the windshield 20 and pillar 50. This makes the inflated airbag 40 cantilevered at the bottom providing a shock absorbing spring-like feature in addition to the cushioning effect due to the internal pressure of the cushion 40. Based upon testing and analysis it is preferred that the cushion thickness be about 200mm with internal pressure in the range of 10-15kPa, however the smaller the cushion thickness the higher the required inner pressure. As mentioned it is believed the position angle α of the cushion alone provides the desired rotation to reduce head and neck trauma, but also that the added spring-like shock absorbing effect increases the ability of the pedestrian airbag 40 of the present invention to soften the blow on the hit pedestrian 30.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. An inflatable external pedestrian protection system for a motor vehicle, the motor vehicle having a hood (10) and a windshield (20) adjacent the hood (10) at a rear end (14) of the hood (10); the inflatable external pedestrian protection system comprises:
an inflatable airbag cushion (40) for deployment between said hood (10) and along said windshield (20);
a means (6) for inflating the airbag cushion (40); the airbag cushion (40) has an inflated deployed cushion position raised angle relative to said windshield, **characterized in that** the cushion (40) has an inflated deployed cushion position angle α between 60° and 90° to a horizontal plane, wherein the airbag cushion (40) has a front panel side (42) and a rear panel side (44), the two panels being joined together by a peripheral seam (46) around the airbag cushion (40), the seam (46) extending along the top, lateral sides and bottom, and wherein the rear side panel (44), facing the windshield when inflated, has a generally uniform flat or substantially straight shape and the front panel (42) has an enlarged lower portion (48) with a generally uniform flat or substantially straight upper portion so upon inflation the cushion (40) forms an inflated chamber with the lower portion providing an impact absorbing thickness that increases toward the hood (10).

2. The inflatable external pedestrian protection system of claim 1 wherein the inflatable airbag cushion (40) when deployed has the cushion position angle α greater than the windshield inclination angle as measured in a horizontal plane.

3. The inflatable external pedestrian protection system of claim 2 wherein the inflatable airbag cushion (40) is configured to deployed within a space between the vehicle windshield (10) and the airbag cushion (40) due to the difference in the windshield inclination angle and the cushion position angle α.

4. The inflatable external pedestrian protection system of claim 1 wherein a pedestrian impact angle β of 65° relative to horizontal forms an included angle θ with the inflated airbag cushion position angle α of 55° or less.

5. The inflatable external pedestrian protection system of claim 4 wherein the included angle θ is 25° when the airbag position angle α is 90°.

6. The inflatable external pedestrian protection system of claim 1 wherein a pedestrian (30) impacting the airbag cushion (40) at a pedestrian impact angle β of 65° will be caused to rotate.

7. The inflatable external pedestrian protection system of claim 4 wherein the smaller the angle θ between the pedestrian impact angle β and the inflated cushion position angle α of the airbag cushion causes greater rotation of the pedestrian (30) reducing the potential for head or neck trauma.

8. The inflatable external pedestrian protection system of claim 1 wherein the cushion position angle α is defined as a straight line passing from the bottom to the top between the front panel side (42) and the rear panel side (44).

9. The inflatable external pedestrian protection system of claim 1 wherein the cushion position angle α is defined as a horizontal plane and a plane line passing generally between the front panel side (42) and the rear panel side (44).

10. The inflatable external pedestrian protection system of claim 1 wherein the cushion position angle α is defined by a line drawn through the peripheral seam (46) along a lateral side.

11. The inflatable external pedestrian protection system of claim 1 wherein the cushion position angle α is located mid-way between the rear (44) and front (42) side inflated panels at the upper portion of the inflated cushion (40) extending in a straight line toward the bottom of the cushion (40) without adjustment for the enlarged lower portion (48) of the front panel (42).

## Patentansprüche

1. Aufblasbares äußeres Fußgängerschutzsystem für ein Kraftfahrzeug, wobei das Kraftfahrzeug eine Haube (10) und eine Windschutzscheibe (20) angrenzend an die Haube (10) an einem hinteren Ende (14) der Haube (10) aufweist, wobei das aufblasbare äußere Fußgängerschutzsystem Folgendes umfasst:
ein aufblasbares Airbag-Kissen (40) zum Entfalten zwischen der Haube (10) und entlang der Windschutzscheibe (20),
ein Mittel (6) zum Aufblasen des Airbag-Kissens (40),
wobei das Airbag-Kissen (40) einen in aufgeblasener entfalteter Kissenposition im Verhältnis zu der Windschutzscheibe erhöhten Winkel aufweist, **dadurch gekennzeichnet, dass**
das Kissen (40) einen Winkel α in aufgeblasener entfalteter Kissenposition zwischen 60° und 90° zu einer horizontalen Ebene aufweist, wobei das Airbag-Kissen (40) eine vordere Bahnseite (42) und eine hintere Bahnseite (44) aufweist, wobei die zwei Bahnen durch eine umlaufende Naht (46) um das Airbag-Kissen (40) miteinander verbunden sind, wobei sich die Naht (46) entlang der Oberseite, der seitlichen Seiten und der Unterseite erstreckt und wobei die Rückseitenbahn (44), die, wenn sie aufgeblasen ist, zur Windschutzscheibe zeigt, eine im Allgemeinen gleichförmige flache oder im Wesentlichen gerade Form aufweist und die vordere Bahn (42) einen vergrößerten unteren Abschnitt (48) mit einem im Allgemeinen gleichförmigen flachen oder im Wesentlichen geraden oberen Abschnitt aufweist, so dass das Kissen (40) auf das Aufblasen hin eine aufgeblasene Kammer bildet, wobei der untere Abschnitt eine stoßabsorbierende Dicke bereitstellt, die zu der Haube (10) hin zunimmt.

2. Aufblasbares äußeres Fußgängerschutzsystem nach Anspruch 1, wobei das aufblasbare Airbag-Kissen (40), wenn es aufgeblasen ist, den Kissenpositionswinkel α hat, der größer ist als der Windschutzscheiben-Neigungswinkel, gemessen in einer horizontalen Ebene.

3. Aufblasbares äußeres Fußgängerschutzsystem nach Anspruch 2, wobei das aufblasbare Airbag-Kissen (40) dafür konfiguriert ist, auf Grund des Unterschieds bei dem Windschutzscheiben-Neigungswinkel und dem Kissenpositionswinkel α innerhalb eines Raums zwischen der Fahrzeug-Windschutzscheibe (20) und dem Airbag-Kissen (40) entfaltet zu werden.

4. Aufblasbares äußeres Fußgängerschutzsystem nach Anspruch 1, wobei ein Fußgänger-Aufprallwinkel β von 65° im Verhältnis zur Horizontalen einen eingeschlossenen Winkel θ mit dem Kissenpositionswinkel α des aufgeblasenen Airbags von 55° oder weniger bildet.

5. Aufblasbares äußeres Fußgängerschutzsystem nach Anspruch 4, wobei der eingeschlossene Winkel θ 25° beträgt, wenn der Airbag-Positionswinkel α 90° beträgt.

6. Aufblasbares äußeres Fußgängerschutzsystem nach Anspruch 1, wobei ein Fußgänger (30), der bei einem Fußgänger-Aufprallwinkel β von 65° auf das Airbag-Kissen (40) aufprallt, veranlasst wird, sich zu drehen.

7. Aufblasbares äußeres Fußgängerschutzsystem nach Anspruch 4, wobei, je kleiner der Winkel θ zwischen dem Fußgänger-Aufprallwinkel β und dem Winkel α in aufgeblasener Kissenposition des Airbag-Kissens ist, eine desto größere Drehung des Fußgängers (30) verursacht wird, was die Möglichkeit für Kopf- oder Halsverletzung verringert.

8. Aufblasbares äußeres Fußgängerschutzsystem nach Anspruch 1, wobei der Kissenpositionswinkel α definiert ist als eine gerade Linie, die von der Unterseite zur Oberseite zwischen der vorderen Bahnseite (42) und der hinteren Bahnseite (44) hindurchgeht.

9. Aufblasbares äußeres Fußgängerschutzsystem nach Anspruch 1, wobei der Kissenpositionswinkel α definiert ist als eine horizontale Linie und eine ebene Linie, die im Allgemeinen zwischen der vorderen Bahnseite (42) und der hinteren Bahnseite (44) hindurchgeht.

10. Aufblasbares äußeres Fußgängerschutzsystem nach Anspruch 1, wobei der Kissenpositionswinkel α definiert ist durch eine Linie, die durch die umlaufende Naht (46) entlang einer seitlichen Seite gezogen wird.

11. Aufblasbares äußeres Fußgängerschutzsystem nach Anspruch 1, wobei der Kissenpositionswinkel α auf halbem Wege zwischen der hinteren (44) und der vorderen (42) aufgeblasenen Seitenbahn am oberen Abschnitt des aufgeblasenen Kissens (40) angeordnet ist, wobei er sich in einer geraden Linie zur Unterseite des Kissens (40) hin erstreckt, ohne Anpassung für den vergrößerten unteren Abschnitt (48) der vorderen Bahn (42).

## Revendications

1. Système de protection de piéton externe gonflable pour un véhicule à moteur, le véhicule à moteur comportant un capot (10) et un pare-brise (20) adjacent au capot (10) au niveau d'une extrémité arrière (14) du capot (10) ; le système de protection de piéton externe gonflable comprenant :
un coussin gonflable (40) destiné à être déployé entre ledit capot (10) et le long dudit pare-brise (20) ;
un moyen (6) pour gonfler le coussin gonflable (40) ;
le coussin gonflable (40) comportant un angle surélevé de la position du coussin gonflable déployé par rapport au pare-brise, **caractérisé en ce que**
le coussin gonflable (40) comportant un angle de la position du coussin gonflable α compris entre 60° et 90° par rapport à un plan horizontal, dans lequel le coussin gonflable (40) comporte un côté de panneau avant (42) et un côté de panneau arrière (44), les deux panneaux étant reliés par une couture périphérique (46) autour du coussin gonflable (40), la couture (46) s'étendant le long de la partie supérieure, des côtés latéraux et de la partie inférieure, et dans lequel le panneau du côté arrière (44) faisant face au pare-brise à l'état gonflé, a une forme généralement uniforme et plate ou sensiblement droite, le panneau avant (42) comportant une partie inférieure agrandie (48) avec une partie supérieure généralement uniforme et plate ou sensiblement droite, de sorte que lors du gonflement, le coussin (40) forme une chambre gonflée, la partie inférieure présentant une épaisseur à absorption d'un impact qui est accrue en direction du capot (10).

2. Système de protection de piéton externe gonflable selon la revendication 1, dans lequel le coussin gonflable (40) forme, dans l'état déployé, un angle de position du coussin α supérieur à l'angle d'inclinaison du pare-brise mesuré dans un plan horizontal.

3. Système de protection de piéton externe gonflable selon la revendication 2, dans lequel le coussin gonflable (40) est configuré pour être déployé dans un espace entre le pare-brise du véhicule (10) et le coussin gonflable (40) par suite de la différence entre l'angle d'inclinaison du pare-brise et l'angle de la position du coussin a.

4. Système de protection de piéton externe gonflable selon la revendication 1, dans lequel un angle d'impact d'un piéton β de 65° par rapport à l'horizontale forme un angle inclus θ avec l'angle de la position du coussin gonflable α correspondant à 55° ou moins.

5. Système de protection de piéton externe gonflable selon la revendication 4, dans lequel l'angle inclus θ correspond à 25° lorsque l'angle de la position du coussin gonflable α correspond à 90°.

6. Système de protection de piéton externe gonflable selon la revendication 1, dans lequel un piéton (30) heurtant le coussin gonflable (40) à un angle d'impact du piéton β de 65° sera entraîné à tourner.

7. Système de protection de piéton externe gonflable selon la revendication 4, dans lequel, plus l'angle θ entre l'angle d'impact du piéton β et l'angle de la position du coussin gonflable α du coussin gonflable est réduit, plus la rotation du piéton (30) est accrue, réduisant ainsi le risque d'un traumatisme de la tête ou du cou.

8. Système de protection de piéton externe gonflable selon la revendication 1, dans lequel l'angle de la position du coussin α est défini comme une ligne droite passant de la partie inférieure vers la partie supérieure entre le côté du panneau avant (42) et le côté du panneau arrière (44).

9. Système de protection de piéton externe gonflable selon la revendication 1, dans lequel l'angle de la position du coussin α est défini comme un plan horizontal et une ligne de plan passant en général entre le côté du panneau avant (42) et le côté du panneau arrière (44).

10. Système de protection de piéton externe gonflable selon la revendication 1, dans lequel l'angle de la position du coussin α est défini par une ligne tracée à travers la couture périphérique (46), le long d'un côté latéral.

11. Système de protection de piéton externe gonflable selon la revendication 1, dans lequel l'angle de la position du coussin α est situé à mi-chemin entre les panneaux arrière (44) et avant (42) gonflés, au niveau de la partie supérieure du coussin gonflé (40), s'étendant dans une ligne droite vers la partie inférieure du coussin (40), sans ajustement pour la partie inférieure agrandie (48) du panneau avant (42).
